# EUROPEAN PATENT SPECIFICATION

(11) **EP 3 366 362 B1**
(45) Date of publication and mention of the grant of the patent: **05.05.2021**
(21) Application number: 17157549.1
(22) Date of filing: 23.02.2017
(51) Int. Cl.: B01D 39/08, B01D 39/16

(54) **A PROTECTIVE VENT AND METHOD FOR PRODUCING A PROTECTIVE VENT**
SCHUTZENTLÜFTUNG UND VERFAHREN ZUR HERSTELLUNG EINER SCHUTZENTLÜFTUNG
ÉVENT DE PROTECTION ET PROCÉDÉ DE PRODUCTION D'UN ÉVENT DE PROTECTION

(43) Date of publication of application: 29.08.2018
(73) Proprietor: Sefar AG, 9410 Heiden (CH)
(72) Inventor: HOSSAIN, Mohammad Mokbul, CH-9410 Heiden (CH); CAMANI, Matteo, 9320 Arbon (CH)
(74) Representative: Wunderlich & Heim Patentanwälte Partnerschaftsgesellschaft mbB

(56) References cited:
- EP-A1- 1 953 286
- WO-A1-2010/107503
- WO-A1-2017/129418
- US-A1- 2014 060 330

## Description

The invention relates to a protective vent according to the preamble of claim 1.

Such a protective vent comprises at least one carrier layer and an electrospinning membrane, which is arranged on the at least one carrier layer, wherein the electrospinning membrane is formed from fibers lying one above the other, forming a porous structure, whereby the porous structure is designed.

Furthermore, the invention relates to a method for manufacturing a protective vent according to the preamble of claim 11.

By using such a method, a carrier layer is provided on which a membrane is arranged, whereby the membrane being produced by the electrospinning method from superimposed fibers having a porous structure, wherein the carrier layer and the membrane form a protective vent membrane.

With advancing technological development in particular with medical care and growing hygiene requirements there is a continuing need for protection of ventilated premises, equipment and accessories, within contact to humans, from hazardous and harmful influences such as i.e. allergens and pathogens e.g. viruses and bacteria. One of the challenges here is to prevent access of harmful liquids, particles or nanoscale dust to the inside of a sterile area.

### BACKGROUND

EP 2 209 405 B1 discloses a bedding product for combating infections, wherein a venting means is arranged with a filter medium containing a filter membrane for removing particles of microbial size. With regard to the construction of the membrane, it is mentioned that it has a PTFE membrane with a nonwoven material of polyvinyl chloride as a support carrier.

EP 1 192 925 A2 discloses a mattress with an envelope in which a ventilation element is arranged. A filter is provided in the ventilation, which is intended to prevent bacteria from entering the mattress.

EP 1 222 886 A2 describes a cushion which has a ventilating opening with a filter. The filter is designed to retain particles with a size of 0.6 microns and larger. A nonwoven plastic material is provided as a support for the filter.

WO 2011/061270 A2 relates to a bed with an arrangement for ventilation and for the determination and retention of microbial particles. For this purpose, a valve arrangement and a ventilation element with a filter diaphragm are provided. The structure of the filter membrane is not explained in detail.

EP 2 557 706 B1 describes a filter medium with a membrane made of nanofibers, the filter medium being expressly intended for automotive interior filtration or for motor air filtration. It is mentioned that the filter medium can also have other filter layers, in particular made of cellulose or a synthetic material, in addition to the membrane made of nanofibers.

EP 1 154 841 B1 relates to a composite membrane which can be used as a filter element. However, the membrane is specifically formed from expanded PTFE. A structure of a membrane made of nanofibers is not disclosed

US 2014/060330 A1 discloses a venting media laminate, for use as an acoustic venting assembly, comprising a microporous membrane layer directly coupled to a fine fiber layer. The fine fiber layer can be directly coupled to the microporous membrane layer through calendaring, adhesive lamination, heat lamination, formation of the fine fiber layer directly on the microporous membrane layer, and the like. The microporous membrane layer may be an expanded polytetrafluoroethylene (ePTFE) membrane.

Composite materials are traditionally made of cellulose acetate, cellulose nitrate, glass fiber, PTFE (polytetrafluoroethylene) membranes and nanofiber mats.

Those have shown unevenness, low mechanical stability, low lifespan, low air permeability and are particularly missing a nanoscaled protective coating.

Conventional membranes which are used for water-repellent applications, for example polytetrafluoroethylene (PTFE; Gore-Tex®), expanded polytetrafluoroethylene (ePTFE) and also conventional membranes have a laminar, dense film structure. These membranes are generally quasi-impermeable to air (0 l/m²*s). The known "respiratory-active" property of film membranes, in particular PTFE membranes, is not due to a porours structure but rather to a direct interaction of the membrane material with water vapor.

Furthermore, in particular, the PTFE and ePTFE membranes can contain harmful raw material residues and traces of long-chain perfluoroalkyl acids (PFAAs), such as significant amounts of perfluorooctanoic acid (PFOA), which was used in their manufacturing process. According to the invention, the protective vent is free of chlorine and bromine. In particular, the inventive protective vent is free from halogens and environmentally harmful compounds such as PFAAs according to the standards IEC 61249-2-21, IPC 4101B and JPCA ES-01-1999.

### SUMMARY OF THE INVENTION

The invention is based on **the object** on provision of a protective vent as well as a method for manufacturing a protective vent which provides a high degree of protection against water, perspiration, grease, pathogens, allergens, oils, dust and dirt individually or in combination with low air resistance.

The object is achieved according to the invention on the one hand by a protective vent with the features of claim 1 and on the other hand by a method for producing a protective vent with the features of claim 11.

Preferred embodiments of the invention are specified in the respective dependent claims.

The protective vent according to the invention suitably comprises a monofilament fabric, or a nonwoven fabric or a knitted fabric or woven fabric as carrier layer and at least one membrane layer and at least a monofilament fabric layer, whereby the layers are connected to each other by various bonding processes and plasma treatment is used to functionalize the membrane and/or at least one carrier layer separately, and/or the final protective vent.

According to the invention a seam is provided as a surrounding edge of the protective vent that is particularly designed to frame and/or reinforce the protective vent.

The membrane of the protective vent according to the invention, which is produced by the electrospinning method, differs from other (polymer) membranes in particular by a multilayer, network-linked, three-dimensionally cross-linked nest-like or grid-like structure with a high specific surface area, thus a high surface area to volume ratio.

The fibers can be designed as nanofibers or microfibers for forming a nanostructure or microstructure. The fibers preferably form a three-dimensional nonwoven network. Such a protective vent also meets particularly stringent protection class requirements. The defined porous structure particularly affects a defined pore size and a defined pore distribution. This can be particularly advantageous for a high porosity of the protective vent.

In another embodiment, the technology described herein is a protective vent which is an effective barrier against the penetration of microorganisms. This barrier effect is claimed to enhance the removal of contaminants from the surface of the vent materials during cleaning.

In another embodiment, the invention of the protective vent has an air permeability of at least 1 l/m²*s, preferably at least 10 l/m²*s, more preferably at least 30 l/m²*s, particularly preferably at least 50 l/m²*s and an water vapor permeability (RET) of between about 0.06 Pa*m²*W⁻¹ and 4.0 Pa*m²*W⁻¹, preferably of between about 0.10 Pa*m²*W⁻¹ and about 2.0 Pa*m²*W⁻¹. (1g/m²/24h = 1m²Pa/W)

According to the invention, the ability of the protective vent has high water penetration pressures, thus water tightness, is defined by the "water column". According to the invention, a specific water column of the inventive protective vent is provided (for example, 100 cm) if the protective vent shows no appreciable permeability to water in the case of a corresponding hydrostatic pressure acting on the protective vent on one side. The respectively given water column is thus a measure of the tightness of the protective vent according to the invention against water. The protective vent according to the invention preferably has a water column of at least 100 cmwc, more preferably of at least 500 cmwc, particularly preferably of at least 2500 cmwc. (1cmwc = 98.06 Pa).

### DETAILED DESCRIPTION OF THE INVENTION

A basic idea of the invention is to provide a protective vent wherein the protective vent is formed with a high porosity, which allows the passage of gases, in particular air, wherein liquids and other materials in particular as defined above are retained and repelled and/ rejected by the protective vent. The terms "protective vent", "vent", "inventive vent", "composite", "composite vent", "composite membrane" are used interchangeably herein.

The protective vent according to the invention is particularly suitable for sterile applications since it is able to retain pathogens, allergens (Table 2) and other small particles and liquids that are harmful or hazardous to complex organisms, in particular humans. Harmful liquids can be e.g. sweat, purulence, blood and others that usually found with ill patients as well as in hospitals in general. Furthermore, harmful liquids according to the invention may comprise kerosene, benzene, gasoline, light acids, alkali compounds, cleaning agents in particular aqueous agents with a pH level between 4 and 10 such as hydrocarbons, ethanol, some diluted solvents.

An ambient pressure strike-through test was conducted against four common organisms based on their ability to act as pathogens in immunocompromised individuals and/ cause allergic sensitization and/ infections: *Pseudomonas aeruginosa* ATCC 13388, *Staphylococcus aureus* (also called *MRSA*) ATCC 43300, *Bacillus atropheaus* ATCC 72 and *Bacteriophage* Phi-X174 ATCC 13706-B1 (host bacteria *Escherichia coli* ATCC 13706). A sterile specimen of the material is placed onto a sterile nutritive agar plate. A microbial (or viral) suspension is then applied to the surface of this specimen, at a concentration of at least 1x10⁶ CFU (or PFU) per test specimen. The microbial (or viral) suspension is let on top of the specimen for 4 hours and 24 hours at a temperature maintained between 20-25°C. At the end of the contact time, the specimen is removed from the agar nutritive plate, which is incubated for 24 hours at the recommended strain's growth temperature. After incubation, the presence of microorganisms on the nutritive agar plate reveals a strikethrough. The observation of growth on nutritive agar plate allows to score the tested materials and to determine their barrier property. The procedure includes positive and negative controls as well as sterility and environmental controls, to ensure that a strike-through observation is a true microbial penetration event.

Customized protective vents can be created with regard to a defined porosity and a defined density of plasma-functional groups, wherein the nanofiber membrane has the maximum pore size between fibers, as measured by Bubble point (ASTM F316-03), of less than about 1 µm, or less than about 0.60 µm, or less than about 0.40 µm, or even less than about 0.20 µm. The protective vent has proven to be the most effective having high filtration efficiency in removing particles that are smaller than 0.30 microns and larger than 0.30 microns. There are four common mechanical principles in composite media to captures particles: inertial impaction - heavy and large particle are trapped and held due to impaction mechanism, diffusion - small particles come in contact with the fibers due to diffusive effects and they don't follow the airstream and are collected, interception - the mid-sized particles makes contact with the fiber and become attached and sieving/straining - particles are larger in all dimensions than the distance between adjoining fibers and thus, they get stuck/filtered. Besides composite arrangement and design, the filtration efficiency is influenced by many other factors such pore size and pore distribution, fiber fineness, specific area to volume ratio of the nanofiber mat etc.

According to an embodiment of the invention the filter medium of the protective vent is e.g. air/vapor-air and/or liquid-air.

The air permeability of the composite is an important property for many high-tech applications. In general, higher basis weight of nanofibers lesser the air permeability and higher the water column of the composite. The air permeability of the protective vent claimed in the invention is based on a differential pressure measurement at 20°C and 65% relative atmospheric humidity. The increased pressure applied to the protective vent on one side is 200 Pa (Pascal) during the measurement and the test area is 20 cm² of the protective vent, in particular according to ISO 9237:1995-12. The air volume passing through the protective vent under these conditions corresponds to 1/500 of the volume flow, which passes through 1 m² of the protective vent in 1 second (l/m²*s). The volume flow of air, which passes through 1 m² of the protective vent in 1 second, is the air permeability claimed according to preferred embodiments of the invention.

The heat and moisture transmission of a composite play an important role in maintaining thermo-physiological comfort. Depending on the end-use, it is necessary to design composite structure with required vapor transmission properties. For example, the surgical facemask is direct contact with skin which should allow moisture, heat and breathing to be transmitted to the atmosphere in order to cool the face, to breathe clean air and to reduce degradation of thermal insulation of the laminate caused by moisture build-up. In addition to biosafety, both air permeability and vapor permeability are important factors in determining facemask performance and ultimately wearing comfort.

A preferred embodiment of the protective vent according to the invention is that the protective vent is coated with a plasma coating, in particular according to the PECVD (plasma enhanced chemical vapor deposition) method. The plasma coating is preferably designed in such a way that it complements the properties of the protective vent, in particular provides a roll-off effect (so-called lotus effect), a barrier effect and/or a non-sticking property. At least, however, the cross-linked plasma polymer, i.e. the plasma coating, can contribute to the oil, grease and/or water-repellent properties of the protective vent.

The PECVD is a method for coating surfaces, by which coatings with different chemical composition are deposited on a substrate. The plasma can be generated directly at the substrate to be coated (direct plasma method) or in a separate chamber (remote plasma method). For example, on account of accelerated electrons, a dissociation of molecules of the reaction gas is provided (plasma), which can affect the layer deposition on the substrate, to reactive plasma particles, for example radicals and ions. Thus, a surface coating can be provided which provides a highly crosslinked polymer structure against conventional wet-chemical polymerization processes (polymerization reaction in a suitable solvent), but does not block the pores of a membrane. The carrier layer according to the invention can be a textile, in particular a woven such as a monofilament or knitted fabric or nonwovens, in particular having a supporting and / or protective function with respect to the applied membrane.

It is particularly preferred in this case that the reactive plasma species penetrate into inter-yarn and -fibers spaces in the protective vent materials and polymerize on fiber surfaces and this resulted in the desired surface modification into the voluminous vent. The film properties can be influenced by the density of the functional groups, degree of crosslinking and the type of the monomer used during plasma polymerization.

It is particularly preferred according to a further embodiment of the invention that the plasma polymer is deposited from a material with a hydrophobic and/or oleophobic property. The plasma coating can contribute to an enhancement of the oil, grease and/or water-repellent properties and the restrain of allergens and other small particles, liquids, pathogens in particular as defined above, of the protective vent, in particular the properties of the electrospinning membrane.

According to invention, the protective vent has high liquid barrier properties having a hydrohead (water column) of at least 100 cmwc, in particular according to ISO 811:1981. Water column was measured on a Hydrotester FX 3000-4M and is reported in centimeters of water column (cmwc). "Water column" is a unit for measuring the pressure on a surface such as a tissue arrangement or a protective vent. A pressure of 1 cm water column is defined as that pressure which corresponds to the hydrostatic pressure in 1 cm water depth. In the present case, the data of the water column refer to a hydrostatic pressure at 20°C water temperature.

Preferably, the protective vent, in particular the applied plasma coating, has a low surface energy with a water contact angle of at least 120°, particularly preferably with a water contact angle of 140° or more, as measured according to DIN 55660-2:2011-12. The oil repellent effect the inventive protective vent was determined according to DIN EN ISO 14419:2010, the wetting by 8 different liquid hydrocarbons was tested and the score includes grades 1 to 8.

As can be seen in Table 4, all embodiments have a very good (6) to best grade (8). In the case of (water) spray tests according to DIN EN ISO 4920:2012 and the determination of the roll off effect (so-called lotus effect) according to the Bundesmann test according to ISO 9865:1991, all embodiments of the protective vent according to the invention reached the best score 5 (1 = worst, 5 = best).

A precise selection of the carrier layer, in particular its yarn fineness, geometry, surface texture as well as the proportion of open surfaces, can have a considerable influence on the final protective vent function. The tensile qualities of the carrier layers depend on filament strength, mesh density, weave pattern and filament strength coefficient. The applicant's monofilaments exhibit high strength physical characteristics such as low shrink, high tenacity, and extremely high modulus level. They do not easily degrade when exposed to destructive chemicals and withstand in high temperature application in both wet and dry environments. The tensile properties of the protective are further influenced by the bond strength of the composite while the thickness of the nanofibers mat is less important in determining high composite vent strength.

The fabric preferably has a filament or yarn diameter of 10 µm to 1000 µm, more preferably 15 µm to 80 µm, in particular preferably 30 µm to 150 µm and a mesh opening of up to 300 µm. According to the present invention a mesh is defined as a woven monofilament fabric. The term "mesh" is used as a synonym for "fabric" or "textile" according to the invention, which both describe the inventive carrier layer.

The inventive protective vent can provide a dustproof property, shows abrasion resistant, is robust, has high stability, shows steam permeability, is durable, is permeable for air and gas (high flux), high throughput / flowrate, can be washed without a significant loss in structure or properties, shows comparatively high thermal stability, low unspecific adsorption (anti-adhesion), hydrophobic and/or oleophobic surface(es) and excellent biocompatibility.

According to a further embodiment of the inventive protective vent, it is particularly expedient that the plasma coating is deposited both on the nanofiber membrane and on the at least one carrier layer. Thus, a flexible use of the protective vent is ensured, wherein the oil-, fat-, pathogen, allergen, dust and/or water-repellent properties of the protective vent can be ensured independently of whether the carrier layer is arranged facing the inside or outside of the of the ventilated object.

A preferred further embodiment of the protective vent according to the invention is that the material is at least mono-unsaturated and/or polyunsaturated, ethers, ketones, aldehydes, alkenes, alkynes, amides, amines, nitriles, thioethers, carbonic acid esters, thioesthers, sulphones, thioketones, thioaldehydes, sulfenes, sulfenamides, fluoroacrylates, siloxanes, epoxides, urethanes, acrylates, polyamide 6 (PA6), polyamide 6,6 (PA66), aliphatic polyamide, aromatic polyamide polyurethane (PU), poly(urea urethane), polyvinyl alcohol (PVA), polyacrylonitrile (PAN), polylactide (PLA), polycarbonate (PC), polybenzimidazole (PBI), polyethylenoxide (PEO), polyethylenterephthalate (PET), poly(butylene terephthalate), polysulfone (PS), polyvinylchloride (PVC), cellulose, cellulose acetate (CA), polyethylene (PE), polypropylene (PP), PVA/silica, PAN/TiO₂, PETFE polyetherimide, polyaniline, poly(ethylene naphthalate), styrenebutadiene rubber, polystyrene, poly(vinyl alcohol), poly(vinylidene fuoride), poly(vinyl butylene), polymethylmethacrylate (PMMA), copolymers, derivative compounds and blends and/or combinations thereof.

For the coating material particular preference is given to materials which, when using a plasma coating process, release radicals or ions or energetic particles which contribute to a oleophobic and non-polar teflon-like (Polytetrafluoroethylene like) surface on the protective vent.

The membrane and/or the carrier layer of the inventive protective vent can be made of polyvinyliden chloride (PVDC), polyvinyliden fluoride (PVDF), polyhexamethylen adipamide (PA6.6), polydodecanamide (PA12), polypropylene (PP), polycaproamide (PA6), polyethylene terephthalat (PET), ethylene monochlor trifluor ethylene (E-CTFE), ethylene tetrafluor ethylene (ETFE), polyethylene (PE), polyoxymethylen (POM), fluorized ethylenepropylene (FEP), bi-component (PA6/PA12), polybutylene terephthalat (PBT), polyether-etherketone (PEEK), perfluoralkoxy (PFA), polyacrylonitrile (acrylic fibers) (PAN), bi-component, PET flame retardant (PET/PBT), polyundecanamide (PA 11), polytetrafluorethylene (PTFE), polyphenylensulfide (PPS), polyhexamethylen sebacinamid (PA6.10), aramide (AR), polyethylene naphtalate (PEN), polyamide carbonfiber (PA/CF), polyester carbonfiber (PET/CF), polyester staple fiber / metalfiber (PET/MT), carbon fiber (CF), copper (CU), polyimide (P84), copper / silver (CU/AG), polycarbonat (PC).

Furthermore, conductive filaments can be weaved during weaving and/ additives can be added to the material of the membrane and/or the carrier layer to impart additional properties of the protective vent, for example, an electrostatic property of the respective material can improve adhesion of the solid ultrafine particles to be filtrated.

According to a further development of the protective vent according to the invention, it is preferred that the carrier layer is firmly connected to the membrane. This can prevent delamination and/or a relative displacement of the layers. In order to form a particularly robust protective vent, it is advantageous according to the invention that the membrane is arranged between two carrier layers in order to increase the strength and the compression resistance of the vent. Thus, at least three layers can be provided. In this case, the membrane can be at least partly covered by carrier layers on both sides, such that at least two carrier layers can have the same requirements (sandwich arrangement) or different properties (hybrid arrangement), which can complement one another in their mode of operation. For example, a first carrier layer can be designed with a hydrophobic and/or oleophobic, i.e. oil, fat and/or water-repellent property, wherein the second nanofiber layer can be designed to repellent against sweat, blood, purulence, allergens and pathogens in particular as defined above and the third carrier layer can be designed to be flame retardant and/or anti-static.

The inventive protective vent can be fixed and installed into a filtration device by a seam or a frame element. The seam or frame element can be provided at least in a circumferential area of the protective vent. The frame may have either a firm or elastic property and encompasses the protective vent. The seam can be a separate element or created by heating and molding or welding the edge, wherein a firm connection is formed.

According to an embodiment of the present invention the protective vent can comprise a single or a combination of the following: prefilter as obtainable "off-the-shelf or made from a single or alternatively a plurality of layers according to the invention i.e. membranes and/or carrier layers; postfilter that can be additionally or alternatively arranged to the prefilter on the inventive protective vent and can be designed from materials and layers as mentioned with regards to the prefilter; asymmetric and/or symmetric membranes as gradient membrane additionally (upstream and/or downstream of the protective vent) and/or as part of the inventive protective vent.

It is particularly preferred that a plurality of carrier layers and a plurality of membranes are alternately arranged in the protective vent, depending on the application-specific functional requirements. The individual carrier layers and membranes can, for example, be designed with different porosity, pore distribution, hydrophobicity, oleophobicity and different dust-repelling property. According to a particularly expedient further development of the inventive composite, it is advantageous that the membrane is formed with a basis weight of between about 0.05 g/m² and about 50 g/m². The average fiber diameter and pore size are already adjustable during the production of the membrane by the electrospinning method and can be adapted to the requirements of the protective vent as required. Preferably, the pore diameter of individual pores differs from the average pore diameter by no more than 500%, preferably not more than 300%, more preferably not more than 100%. The fibers are preferably formed in membranes with a diameter of 40 nm to 1000 nm, particularly preferably 80 nm to 250 nm. The diameters of individual fibers of a membrane preferably have similar diameters. In particular, the diameter of individual fibers differs from a mean fiber diameter by less than 500%, preferably 300%, particularly preferably less than 100%. The membrane according to the invention can be used, for example, for matrasses, pillows, duvets, beddings, cushions, ventilation filter for (electric) equipment (in and/or out), (surgical) masks, (surgical) coats, intravenous inline filter sets, pressure filtration equipment (e.g. nasal spray), in particular in in medical devices, room ventilation and venting barrier media for industrial applications.

The invention is also directed to a bedding product with at least one protective vent as described herewith. A bedding product comprises at least the above-described matrasses, pillows, duvets, beddings etc.

The invention is further directed to an electronic or electrical appliance with a housing with at least one protective vent as described herewith. Those appliances comprise at least mobile phones, portable media players, high fidelity equipment, tablets, laptops, portable devices of any kind and televisions.

Furthermore, the inventive protective vent can be applied in filter technology, acoustic vents, ventilation filters, fuel filtration, water separation, clothing, packaging, building and electronic seals, shoes, wound dressings or facial masks. The individually adjustable porosity of the protective vent according to the invention can, for example, advantageously contribute to a deposition of solids in a gas stream or to provision of a respiratory-active support, which can be used in a wound treatment.

The terms "membrane", "electrospinning membrane", membrane layer", "nanofiber layer", "nanofiber membrane", "nanofiber mat" and "nanofiber web" are used interchangeably herein to refer to an electrospinning nonwoven. A basic idea of the inventive method is to form nanofiber web from a polymer solution on a support layer using an electrospinning apparatus. In this case, the membrane can be formed with a defined porosity, i.e., at least with a defined pore size and/or pore distribution, a density of membrane-forming fibers being adjusted. The proportionate volume of the fibers as well as the average number of fibers in a given volume of the membrane can be adjusted. The carrier layer can in this case serve, in particular, as a stabilizing and/or protective layer for the membrane. Thus, the inventive vent is capable of withstanding significant mechanical stress without damage associated with forming the vent into useful filter shapes and sizes.

For a particularly reliable coupling and embedding of the individual protective vent layers, it can be advantageous according to the invention that the membrane is bonded with the carrier layer by methods well known in the art, including but not limited to reactive hot-melt bonding, laser bonding, ultrasonic welding, lamination, thermal calendering, gluing, or a combination thereof. For example, the hotmelt-bonding can be carried out with an epoxy, acrylate and/ or polyurethane adhesives. Delamination can thus be reliably prevented.

It is particularly preferred that the connecting points between the carrier layer and the membrane be provided in a point-like or linear manner and are preferably distributed evenly over the protective vent, which can only result in a slight loss of porosity or air permeability.

For a particularly efficient manufacturing method of the inventive protective vent it can be advantageous according to a further development that the electrospinning membrane is produced directly on the carrier layer, the membrane being firmly connected to the carrier layer. In principle, it is possible to manufacture the membrane on a collection substrate, for example a carrier nonwoven web or a carrier fabric, by means of the electrospinning method and transfer the membrane in a second step to the desired carrier layer according to the invention, for example a fabric, in a delamination-lamination process.

The direct deposition of the membrane on the carrier layer according to the invention can prevent complex transfer processes of the membrane. Furthermore, the surface of the carrier layer can be chemically and/ or morphologically modified prior to the electrospinning process, as a result the membrane can adhere particularly firmly to the carrier layer during formation of the membrane. The membrane can have a layer thickness of less than 100 µm, in particular less than 50 µm, preferably a layer thickness of 1 to 10 µm can be provided. According to the invention, a membrane with these low layer thicknesses can already contribute to the water column and air permeability according to the invention, in particular when provided on the carrier layer of the inventive protective vent.

According to an embodiment of the inventive method, at least one further carrier layer is provided, which is likewise connected to the membrane layer, the membrane being arranged between the carrier layers. In order to protect the membrane, for example, against mechanical influences in an aggressive environment that harms the membrane, the membrane can be provided with support layers from both sides.

In the case of a multilayer arrangement, a so-called multilayer construction, the protective vent can be formed with at least two carrier layers and at least two membrane layers, the membrane layers being arranged one above the other. Preferably, at least one carrier layer is arranged between the first membrane and the at least second membrane.

It is particularly preferred according to the method according to the invention that the protective vent is provided with a surface coating by a plasma coating method, whereby an introduction of specific functional groups on the surface of the protective vent or the modification of the surface of the protective vent is made possible. The oil, grease, dirt, water-repellent and/or other properties of the protective vent as stated above can be influenced particularly advantageously by means of the nanoscaled coating, the porosity and/or the air permeability of the coated membrane layer essentially coincides with the permeability in the uncoated state.

By means of the plasma coating, a ultrathin functional film, in particular a hydro- and/or oleophobic function, is applied to the protective vent, in particular the individual fibers of the membrane and/or the individual fibers or filaments of the carrier layers. In this case, particularly thin layer thicknesses of a few nm (nanometers), in particular less than 80 nm, preferably of 5 nm to 40 nm, can be achieved. The radicals generated during plasma polymerization (radical-dominated plasma polymerization) are negligibly small relative to the pore diameter and thus they can easily penetrate into the inter-fiber/ -filament spaces. Therefore, the pore diameter of a membrane layer according to the invention is not altered by a coating after a plasma-assisted gas-phase deposition, such as, for example, the PECVD process. These plasma polymers can have embedded fluorine-containing and/or fluorine-free functional groups which are, in contrast to classical fluorocarbons, free of perfluoroalkyl acids (PFOS, PFOA etc.), which have already been identified as a worldwide threat to the environment. Moreover, wet-chemical based methods (pad-dry-cure etc.) which are commonly used in textile finishing and are not suitable for treating nanofiber web, since the openings (pores) can get clogged.

### MANUFACTURING METHODS AND PROCESSES

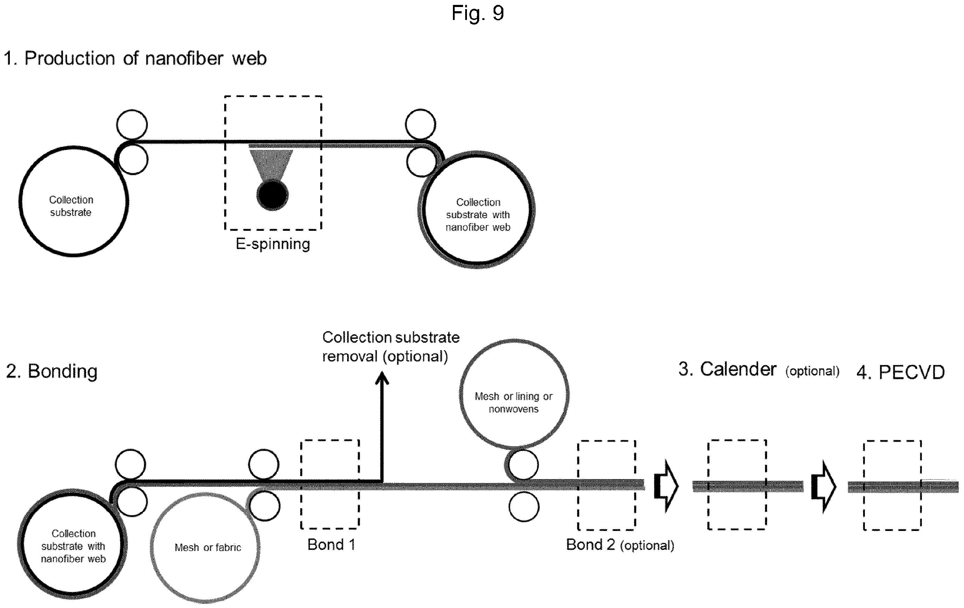

A preferred manufacturing method is described in connection with Fig. 9, which is a schematic drawing.

This scheme of Fig. 9 shows a manufacturing process for the protective vent. A collection substrate (top picture) is provided on which the electrospinning membrane is formed (first production step). The electrospinning membrane is formed according to generally known concepts and further described in the following.

In a second step the formed a membrane is transferred and bonded (Bond 1) onto a carrier layer and the original collection substrate on which the electrospinning membrane has been formed can be optionally removed (collection substrate removal). According to the above provided to diagram the carrier layer is a mesh / fabric.

Optionally their second bonding (Bond 2) can take place after introduction of the second outer layer followed by an optional calender process. Thus, the membrane can be optionally arranged between two equal or different layers forming a sandwich structure. The second outer layer can be provided for example as a mesh, lining or nonwoven material. Finally, a plasma coating is applied to at least one carrier layer and the membrane.

### Electrospinning

The processes for making the nanofiber web are illustrated in WO 2006/131081, WO 2008/106903. Briefly, in the electrospinning process a high voltage is used to create an electrically charged jet of polymer solution or melt out of the pipette. Before reaching the collecting screen, the solution jet evaporates or solidifies, and is collected as an interconnected web of small fibers. One electrode is placed into the spinning solution/melt and the other attached to the collector. In most cases, the collector is simply grounded. The electric field is subjected to the end of the capillary tube that contains the solution fluid held by its surface tension. This induces a charge on the surface of the liquid. Mutual charge repulsion and the contraction of the surface charges to the counter electrode cause a force directly opposite to the surface tension. As the intensity of the electric field is increased, the hemispherical surface of the fluid at the tip of the capillary tube elongates to form a conical shape known as the Taylor cone. Further increasing the electric field, a critical value is attained with which the repulsive electrostatic force overcomes the surface tension and the charged jet of the fluid is ejected from the tip of the Taylor cone. The discharged polymer solution jet undergoes an instability and elongation process, which allows the jet to become very long and thin. Meanwhile, the solvent evaporates, leaving behind a charged polymer fiber. In the case of the melt the discharged jet solidifies when it travels in the air.

### Bonding methods

There are different bonding techniques available. Hotmelt gravure lamination technology, ultrasonic bonding technology, dipping bonding technology, UFD fiberized spray technology (hotmelt) and spun-web bonding technology.

Hotmelt gravure lamination technology is industrially established for in line process. Thus, two steps bonding can also be done in one line for "sandwich" type membrane. It uses a multi-purpose hotmelt laminating and coating system which consists of a gravure roller for dot coating, a revolver dosing head (pos/pos or neg/neg) and application roller and a laminating roller and counter pressure roller.

The gravure roller is used to dot coating with adhesive, whereby two different reactive PU based adhesives (one for PU e-spinning membrane and the other for PA6 membrane) can be used. A high bond strength can be obtained by about 15-25% air permeability loss. The adhesive must be carefully chosen to avoid problems during end application of the membrane (conformity, physical & chemical suitability, medical & food grade etc.). A stiffening of the materials is observed because of adhesives.

The dipping bonding technology (chemical bonding) can be used for the pre-treatment of a carrier prior to the electrospinning process, which is sometimes preferable. Also, an additional process step for bonding can be eliminated, which is a major advantage. The two layers laminate can then be used for second bonding e.g. hotmelt, spun-web, UFD etc. to form a multilayer vent.

The UFD is a fiberized spray technology and the most advanced technology for hot melt adhesive applicators. The laminated plate technology (LPT) is applied to produce filament strands of adhesive. Heated air is used to elongate those strands and lay them down in random or ordered patterns. In many cases, by using UFD technology, one can cut adhesive usage by 20-50% without negatively influence the bond strength or durability by high precision application of adhesives. A non-contact mode is available which yields in less chance for damages of e-spun fibers during lamination. The UFD technology is a cleaner process than hotmelt gravure lamination.

The spun-web bonding technology yields rather a three dimensional structure than a film with a closed surface. The open structure makes the resultant laminate more flexible and high air permeability. Webs are made of different materials: co-polyamide, copolyester, co-polyolefins, polyurethanes etc. The spun-web technology is a very simple process. Three major parameters to be considered during lamination are temperature, pressure and time.

### Calendering

Calendering is used on materials such as fabric, mesh, laminate vent to obtain a smoother and thinner material, whereby the material is passed between or under rollers at raised temperatures and pressures. The size and shape of the pores can be affected depending on the calendering conditions.

### Plasma PECVD

The plasma treatment of textile materials can be applied as textile finishing process for technical and medical textiles as well as for composite materials to improve their surface properties like water and oil repellency. Compared to conventional wet-chemical textile finishing, plasma technology shows advantages regarding environmental issues. With the PECVD treatment, e.g. improvement of adhesion characteristics, increasing hydrophobicity, introducing special functional groups on the surface, or modifying the surface morphology can be obtained.

In plasma deposition, which is commonly known as plasma polymerization or PECVD, a very thin polymer layer (nanoscaled) can be deposited on the substrate surface. The layer is formed through polymerization of an organic gas, which is directly polymerized on the substrate surface. In contrast to classic polymerization, plasma polymerization can use every monomer gas or vapour which is not limited to their reactivity. The plasma polymer shows unconventional polymerisation behaviour with branched and randomly terminated chains and a high degree of crosslinking.

Fluoropolymers are widely used in imparting hydrophobic and oleophobic properties since they have very low surface tensions. Most of these effective fluoro-compounds are based on the fluorocarbons which contain chains of 8 carbons and 17 fluorine atoms. When applied via classical "wet- chemistry" these long-chain fluorinated polymers often contain residual raw materials and trace levels of long-chain PFAAs as impurities as discussed above.

On the contrary, PFAAs-free fluorinated plasma coatings have a great potential due to their mechanical stability, elasticity and flexibility, while leaving the air permeability unaffected. This non-aqueous method has the capability to enhance or replace conventional wet-finishing processes such as water, oil and stain repellent finishing in the textile industry.

The invention is further described below with reference to preferred embodiments, which are illustrated schematically in the accompanying drawings.

### Brief description of the drawings

In the drawings:
- Fig. 1: shows a schematic cross-sectional representation of a protective vent according to the invention in its simplest embodiment ("single layer"),
- Fig. 2: shows a schematic cross-sectional representation of the protective vent according to the invention in the so-called "sandwich" arrangement,
- Fig. 3: shows a schematic cross-sectional representation of the protective vent according to the invention with a multi-layer construction,
- Fig. 4: shows a schematic cross-sectional representation of the protective vent according to the invention in a "hybrid" arrangement with two different carrier layers,
- Figs. 5 - 8: show SEM-images of the protective vent, and
- Fig. 9: shows a schematic drawing of a preferred method according to the invention.

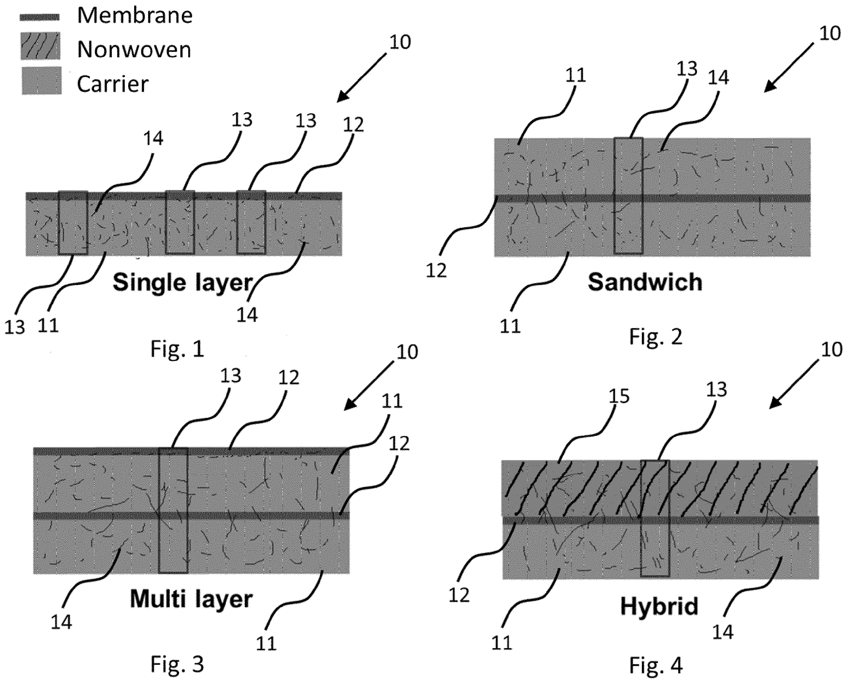

Fig. 1 shows a cross-sectional view of the protective vent 10 according to the invention with a carrier layer 11. A membrane 12 is arranged on the carrier layer 11, which is formed according to the electrospinning method and is applied on the carrier layer 11. For an improved adhesion of the membrane layer 12 to the carrier layer 11, the protective vent can be formed with at least one connecting point 13, which connects the two layers to each other. This may be, in particular, a melting or gluing site in the form of points or lines. Due to the small layer thicknesses of the carrier material 11 as well as the membrane 12, the protective vent can be completely penetrated by the connecting point 13 at the connecting area. The protective vent 10, in particular the electrospinning membrane 12, can be formed with a porosity. The surface of the protective vent 10 as well as the fibers of the pores can be coated with a coating material, which is applied in particular by the plasma deposition method. The surface coating of the fibers is schematically illustrated in the figures by the points and lines 14. In accordance with the invention, the protective vent 10 can be completely surface-coated with the plasma polymer, meaning a coating of individual fibers and filaments of the membrane and the carrier layer. This may also comprise fibers of the region lying in the interior of the protective vent or a lower region within the pores of the membrane. Thus, not only the macroscopic outer surface of the protective vent can be coated but also the microscopic inner surface, i.e., for example, inner fibers, non-uniformities, wherein the individual fibers are encapsulated or covered with the coating material.

Fig. 2 shows the protective vent 10 according to the invention in a so-called "sandwich" arrangement. In this, the membrane 12 is arranged between two carrier layers 11, as a result of which the membrane layer 12 is protected, such that the resulting vent is capable of withstanding mechanical forces in application. In one embodiment of the sandwich arrangement, for example, an air permeability of 15.6 l/m²*s can be achieved. In principle, an air permeability of up to 50 l/m²*s can be achieved in the sandwich, multi-layer or hybrid arrangement. In any possible arrangement of layers in a protective vent 10, these layers can be arranged one on top of the other by simple lamination. However, the layers can also be firmly connected to one another via connecting points 13, as a result of which a particularly reliable mechanical resilience of the protective vent 10 can be achieved.

Fig. 3 shows a multilayer arrangement of the protective vent 10 (multilayer). In this arrangement, alternating carrier layers 11 and membrane layers 12 are provided one above the other.

According to Fig. 3, two carrier layers 11 and two membrane layers 12 are provided. However, a multilayer arrangement can also have any number of carrier layers 11 and/or membrane layers 12. It is likewise possible to provide two membrane layers 12 directly one above the other between two or more carrier layers 11. Even in the case of a multilayer arrangement, the plasma coating can be provided preferably subsequent to the layer stacking on the microscopic surface of all superimposed membrane layers 12 and carrier layers 11. Accordingly, the plasma coating can also be provided on the inside surfaces of the protective vent 10 in the case of a multilayer construction.

Fig. 4 shows an embodiment of the protective vent 10 according to the invention in which the membrane layer 12 is arranged between a first carrier layer 11 and a second carrier layer 15. In principle, the first carrier layer 11 can in particular be designed as a fabric, whereas the second carrier layer 15 can differ from the first carrier layer 11 and, in particular, can be provided as a nonwoven material. With such a "hybrid" arrangement properties of different materials can advantageously be combined in the protective vent 10, whereby filter, protective and anti-biohazardous properties can be realized in an advantageous manner in the protective vent 10.

According to Fig. 4, a plasma coating can be provided on the entire surface of the protective vent 10, the plasma polymerization also taking place within the protective vent 10 in deeper layers. It is also conceivable to provide for a multilayer construction of the protective vent 10 with different carrier layers 11, 15 and differently designed membrane layers 12 e.g. with different pore size distribution.

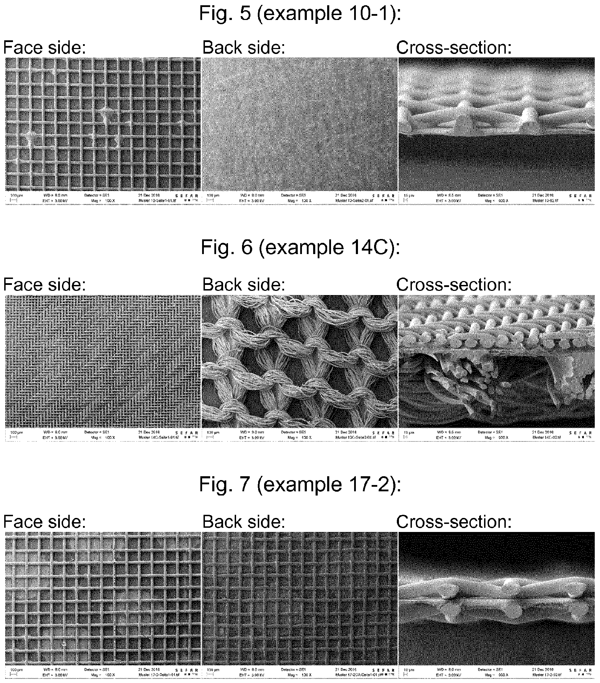

In the following enclosed figures of scanning electron microscope (SEM) images of embodiments of the inventive protective vent are discussed (Fig. 5 to 9). The terms "symmetric" and "asymmetric" refer to equal or different outer layers in a sandwich system.

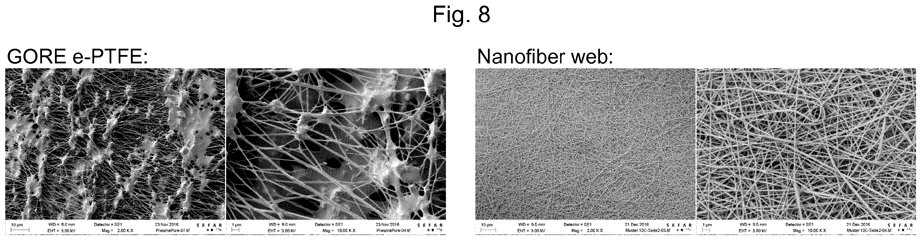

In Fig. 5 to 7 SEM images of embodiments 10-1, 14C and 17-2 of the protective vent are provided. Also in Fig. 8 SEM, pictures of commercial Gore membrane and electrospinning membrane are provided for comparison.

The SEM images show a top view of the protective vent as well as cross-section (side view). The magnification of the top (face / back) and cross-section views are 100X and 500X, respectively.

In Fig. 5 (example 10-1), the face view is showing the carrier layer and the membrane layer whereby the back view is only showing the membrane layer from the other side. The face side of example 10-1 also shows the textile monofilament structure (plain weave) above the membrane structure. The cross-section view of example 10-1 shows the carrier layer arranged on top of the membrane (also two layers vent).

Example 14C (Fig. 6) shows a sandwich structure wherein the carrier layer is a woven monofilament textile structure (twill weave) above a membrane. The cross-section view shows a second outer layer below the membrane, the membrane being arranged between the woven carrier layer and the knitted carrier layer. The second outer layer (knitted fabric) differs in its structure from the carrier layer of the inventive protective vent.

Example 17-2 (Fig. 7) shows a monofilament textile structure (plain weave) above a membrane. The bonding points can also be seen in this example. From a side view (cross-section) it can be seen that the membrane is arranged between two equal outer layers thus, the second layer equals with a carrier layer whereby the membrane is arranged between the two layers (symmetric sandwich structure).

For comparison, SEM-images of Gore e-PTFE membrane and nanofiber web are provided (Fig. 8). The images show a structure which is different from the electrospinning membrane structure of single fibers lying on top of each other forming a 3D-network of high porosity with discrete fibers. Based on SEM images presented here it is also clear that a relatively large average pores are formed in e-PTFE membrane and these are mostly arranged in one direction and non-uniform.

### Comparative example - barrier against microorganisms

The results of the test as shown in Table 2 demonstrate that the inventive vent is an effective microbial barrier to a range of gram-positive and gram-negative motile. The vent maintained 100% patency after 4 and 24 hours. The vent prevented penetration of microorganisms into the agar. The inventive vent provided a 100% effective microbial barrier against *Pseudomonas aeruginosa, Staphylococcus aureus* (also called *MRSA*), *Bacillus atropheaus* and *Bacteriophage* ΦPX174, as no penetration of the bacteria, viruses were obtained.

### Comparative example - water column and air permeability

Table 3 illustrates the water tightness and air permeability of a mesh (woven monofilament) alone, a mesh layered with a membrane and a membrane layered mesh with a coating (inventive protective vent) as explained above. The material of the inventive protective vent (mesh + nanofiber web + PECVD) shows the best water tightness with a water column of 1609 cmwc, whereas uncoated vent shows very low water column of 8 cmwc. Nanofiber layer has strong influence on air permeability. Air permeability of face or backing materials has less influence on the air permeability of the whole composite but still material having very low air permeability causes low air permeability of the composite. The shape and size of the pores in nanofiber layer are not affected by the ultrathin coatings yielded by plasma polymerization. In contrast, many conventional wet-chemical coatings close up the open structure of the membrane and thus hinder any transport of air.

### Comparative example - water and oil repellency

Table 4 shows the table of the results of the water contact angle measurement according to DIN 55660-2:2011-12, oil repellency test according to DIN EN ISO 14419:2010, Federal German test according to ISO 9865:1991 and the (water) spray test according to DIN EN ISO 4920. A water contact angle greater than 130° is obtained on plasma-coated vent, whereas untreated samples show a water contact of less than 100°. In the "oil droplet tests", the oleophobicity of a surface is determined by means of the form of an oil droplet on the surface to be tested, using standardized oils (1 to 8, Table 4). Particularly oleophobic surfaces show a strong repellent behavior not only with the oils 1 to 5 but also with the oils 6, 7 and 8. The best result is shown in this test by the grade 8 (highest repellency effect). All the embodiments according to the invention have good (grade 6) to very good (grade 8) oleophobic properties. The examples according to the invention show an excellent water-repellent effect: the so-called "lotus effect" with best score (5 of 5) in the Bundesmann test and also the best grade (5 of 5) in the spray test.

### Comparative example - protection of nanofibers and composite arrangement

Nanofibers, in particular PA6 nanofibers produced through electrospinning are very sensitive and they are mechanically weak. Therefore, it is important to protect nanofibers from destructive and harsh conditions during application. Abrasive force is an example can ablate nanofibers. Therefore, abrasion resistance is one of the limiting factors in determining the lifetime of a product. The applicant has long lasting experience in producing high strength monofilament fibers. Meshes made from those high strength monofilaments are the optimal candidates to make nanofibers composite for industrial applications and protect them from aggressive atmospheres.

It was found that while having similar filament strength if the fabric rigidity changes, the breaking force changes drastically. In case of plain weave, the floats are evenly distributed within the total fabric area, breaks occur in a localized manner. Elongation at break of densely woven mesh is generally greater than less dense mesh and in the same manner, as the rigidity of mesh increases, composite's elongation at break increases (data not shown).

### Comparative example - air permeability and calendering

Depending on the application the physical properties of nanofibers membrane such thickness, density, pore size and shape can be adjusted further by a calendering process, where the important parameters such as roller temperature, nip pressure, residence time (i.e. line speed) are to be considered to obtain required properties with a defined solidity. Furthermore, the properties of the carrier substrate may have affected by the calendering conditions used. For example, the air permeability is reduced by about 50% (example 10-1) by the calendering process i.e. high density nanofibers layer can be obtained through calendering of the final product.

### Comparative example - filtration efficiency

The protective vent containing PA6 based nanofibers is proven to be very efficient up to 99.998% effective according to EN 149 in capturing and preventing particles as small as 0.30 microns (nom.). So far, no filter of this type has been invented. The best commercial HEPA filter (PTFE) has maximum efficiency of 99.97%. It is also shown that particles smaller (and larger) than 0.30 microns are trapped and captured by newly developed composite media (data are not shown). The applicant has made a notable advancement in reducing pressure drop and in operating at 100% efficiency on target contaminants. Depending on the application a good compromise on pressure drop and barrier against particle penetration can be obtained. The resistance to air flow for the product over the time in service is to be considered to extend the lifetime of the filter media. There are several key factors to optimize filter function with extended filter life: among others specific surface, symmetric and/ asymmetric arrangement, gradient layer-structures etc.

### Comparative example - water vapor permeability

The RET (resistance-evaporation-transmission) value, measured according to ISO 11092, in Table 5 indicates the water vapor resistance of a composite, i.e. the lower the resistance, more breathable the composite vent. For example, RET < 6 = highly breathable and RET > 20 = non-breathable. Commercial ePTFE membrane has a RET value of between 3 - 6 is also shown in Table 5 for comparison. RET value also depends on many factors such as composite type, face and backing materials, nanofibers mat construction, porosity, air permeability, thickness of the composite, surface properties etc. An excellent vapor transfer rate up to RET value of 0.22 is obtained with PA6 based nanofibers vent.

**Table 1: Tests for assessment of the properties of the inventive protective vent.**

| Property | Standard / Method | Property | Standard / Method |
|---|---|---|---|
| Resistance to water penetration | ISO 811:1981 | Pore distribution & bubble point | ASTM F316-03 |
| Air permeability | ISO 9237:1995-12 | Breaking force max | DIN EN ISO 13934 |
| Microbial barrier test - ambient pressure test | Centexbel method | Elongation at Break | DIN EN ISO 13934 |
| Water contact angle | DIN 55660-2:2011-12 | Mesh opening warp/weft | ASTM E11 |
| Water repellency (Spray test) | DIN EN ISO 4920:2012 | Filament diameter | ASTM E11 |
| Water repellency (Bundesmann test) | ISO 9865:1991 | Open area | ASTM E11 |
| Oil repellency | DIN EN ISO 14419:2010 | Thickness | ISO 5084 |
| Water vapor permeability | ISO 11092 | Filtration efficiency | EN 149 |

**Table 2: Microbial penetration results towards Pseudomonas aeruginosa, MRSA, and Bacillus atrophaeus and viral penetration results towards Bateriophage ΦX174 with 2 different contact times (4 hours and 24 hours) and (each). Controls results are not shown here: growth was observed for positive controls and no growth (no plaques of lysis for Bacteriophage ΦX174) was observed for negative controls for each stain.**

| Sample reference | Contact time | Replicate no. | Growth observation | Medium growth promotion ability check |
|---|---|---|---|---|
| Example 14C | 4 hours | 1 | No growth | ✔ |
| (both face and back sides) | | 2 | No growth | ✔ |
| | | 3 | No growth | ✔ |
| | | 4 | No growth | ✔ |
| | | 5 | No growth | ✔ |
| | 24 hours | 1 | No growth | ✔ |
| | | 2 | No growth | ✔ |
| | | 3 | No growth | ✔ |
| | | 4 | No growth | ✔ |
| | | 5 | No growth | ✔ |

| | | | | |
|---|---|---|---|---|
| ✔ = growth observed when nutritive agar medium (for which no strike-through has been observed) is inoculated with the tested microorganism. The concentrations of the *Pseudomonas aeruginosa, MRSA, Bacillus atrophaeus spores* and *Bacteriophage* suspension are 1.6 10⁷ CFU/ml, 9.8 10⁶ CFU/ml, 5.1 10⁶ spores/ml and 1.2 10⁶ CFU/ml, respectively. | | | | |

**Table 3: Water tightness and air permeability of the protective vent (mesh + nanofiber web + PECVD) as well as comparable material without coating and without coating and without mesh (monofilament fabric).**

| Sample | Water column (cmwc) | Air permeability (l.m²/s) |
|---|---|---|
| Mesh (3A07-0005-115-12) | 0 | 67 |
| Mesh + nanofiber web | 8 | 12 |
| Mesh + nanofiber web + PECVD | 1609 | 12 |

**Table 4: Water and oil repellency of the protective vent.**

| Protective | vent | Contact angle (°) | Oil grade | Lotus effect | Spray grade |
|---|---|---|---|---|---|
| Example 1 | face | 131.9±1.7 | 7 | 5 | 5 |
| | back | n/a | 7 | 5 | 5 |
| Example 2 | face | 130.5±1.0 | 6 | 5 | 5 |
| | back | n/a | 6 | 5 | 5 |
| Example 3 | face | 135.7±2.1 | 7 | 5 | 5 |
| | back | n/a | 7 | 5 | 5 |
| Example 4 | face | 139.4±1.6 | 8 | 5 | 5 |
| | back | n/a | 7 | 5 | 5 |
| Example 5 | face | 133.4±3.0 | 7 | 5 | 5 |
| | back | n/a | 7 | 5 | 5 |
| Example 6 | face | 132.8±1.6 | 7 | 5 | 5 |
| | back | n/a | 7 | 5 | 5 |

**Table 5: Water vapor permeability of the protective vent.**

| Example | Water vapor permeability, RET [Pa*m²*W⁻¹] |
|---|---|
| Commercial membrane e.g. ePTFE | 3-6 |
| 10A | 3.18 |
| 10C | 2.60 |
| 14C | 1.30 |
| 9 | 0.40 |
| 17-2 | 0.78 |
| 10-1 | 0.22 |
| 17-2 CA | 0.80 |
| 10-1 CA | 0.32 |

In the present table,lg/m²/24h = 1m²Pa/W)

## Claims

1. Protective vent comprising
- at least one carrier layer (11, 15) and
- an electrospinning membrane (12) which is arranged on the at least one carrier layer (11, 15), wherein the electrospinning membrane (12) is formed from fibers lying one above the other, forming a pore structure, whereby the pore structure is designed,
**characterized in that**
- the carrier layer (11, 15) comprises a monofilament fabric,
- a plasma coating (14) is applied both to the electrospinning membrane (12) and to the monofilament fabric of the at least one carrier layer (11, 15),
- a bonding is provided that connects the carrier layer and the membrane, and
- a seam is provided as a surrounding edge of the protective vent that is designed to frame and/or reinforce the protective vent.

2. Protective vent according to claim 1,
**characterized in that**
the membrane (10) is provided with the plasma coating (14) according to the Plasma Enhanced Chemical Vapour Deposition (PECVD) method.

3. Protective vent according to claim 1 or 2,
**characterized in that**
the plasma coating (14) is formed from a material with hydrophobic and / or oleophobic properties.

4. Protective vent according to claim 3,
**characterized in that**
the material comprises at least saturated, mono- and / or polyunsaturated ethers, ketones, aldehydes, alkenes, alkynes, amides, amines, nitriles, thioethers, carboxylic esters, thioestheses, sulphones, thioketones, thioaldyhydes, sulfenes, sulfenamides, fluoroacrylates, siloxanes, epoxides, urethanes, acrylates, polyamide 6 (PA6), polyamide 6,6 (PA66), aliphatic polyamide, aromatic polyamide polyurethane (PU), poly(urea urethane), polyvinyl alcohol (PVA), polyacrylonitrile (PAN), polylactide (PLA), polycarbonate (PC), polybenzimidazole (PBI), polyethylenoxide (PEO), polyethylenterephthalate (PET), poly(butylene terephthalate), polysulfone (PS), polyvinylchloride (PVC), cellulose, cellulose acetate (CA), polyethylene (PE), polypropylene (PP), PVA/silica, PAN/TiO₂, PETFE polyetherimide, polyaniline, poly(ethylene naphthalate), styrenebutadiene rubber, polystyrene, poly(vinyl alcohol), poly(vinylidene fuoride), poly(vinyl butylene), polymethylmethacrylate (PMMA), copolymers, derivative compounds and blends and/or combinations thereof.

5. Protective vent according to one of claims 1 to 4,
**characterized in that**
the carrier layer (11, 15) is fixedly connected to the membrane (12).

6. Protective vent according to one of claims 1 to 5,
**characterized in that**
the membrane (12) is arranged between two carrier layers (11, 15).

7. Protective vent according to one of claims 1 to 6,
**characterized in that**
the membrane (12) is formed with a maximum pore size of about 0.10 µm to 1.0 µm measured according to ASTM F316-03.

8. Protective vent according to one of the claims 1 to 7,
**characterized in that**
the membrane (12) is formed as a barrier against the penetration of microorganisms.

9. Bedding product,
**characterized in that**
at least one protective vent according to one of the claims 1 to 8 is provided.

10. Electronic or electrical appliance with a housing,
**characterized in that**
at least one protective vent according to one of the claims 1 to 8 is provided.

11. Method for producing a protective vent as claimed in one of the claims 1 to 8,
wherein
- a carrier layer (11, 15) is provided, and
- a membrane (12) is arranged on the carrier layer (11, 15), the membrane (12) being produced by the electrospinning method from superimposed fibers having a porous structure, wherein the carrier layer and the membrane form a protective vent membrane
**characterized in that**
- a monofilament fabric is provided as the carrier layer (11, 15),
- the protective vent membrane (10) is treated by a plasma coating process, wherein a surface coating (14) is applied both to the carrier layer (11, 15) with the monofilament fabric and to the electrospinning membrane (12), and
- the protective vent membrane is furnished with a bonding connecting the carrier layer and the membrane
- a seam is provided as a surrounding edge of the protective vent that is designed to frame and/or reinforce the protective vent.

12. The method according to claim 11,
**characterized in that**
the membrane (12) is firmly bonded to the carrier layer (11, 15) by means of a hot-melt process, in particular by means of a laser, by ultrasonic, by lamination, by gluing or by a combination thereof.

13. The method according to claim 12,
**characterized in that**
the electrospinning membrane (12) is produced directly on the carrier layer (11, 15), the membrane (12) being fixedly connected to the carrier layer (11, 15).

14. The method as claimed in one of claims 10 to 13,
**characterized in that**
at least one additional carrier layer is provided, which is also connected to the membrane, wherein the membrane is arranged between the carrier layers.

## Patentansprüche

1. Schutzentlüftung mit
- mindestens einer Trägerschicht (11, 15) und
- einer elektrogesponnenen Membran (12), welche auf der mindestens einen Trägerschicht (11, 15) angeordnet ist, wobei die elektrogesponnene Membran (12) zum Bilden einer Porenstruktur aus übereinander liegenden Fasern gebildet ist, wobei die Porenstruktur ausgebildet ist,
**dadurch gekennzeichnet,**
- **dass** die Trägerschicht (11, 15) ein Monofilamentgewebe aufweist,
- **dass** eine Plasmabeschichtung (14) sowohl auf die elektrogesponnene Membran (12) als auch auf das Monofilamentgewebe der mindestens einen Trägerschicht (11, 15) aufgebracht ist,
- **dass** eine Verbindung vorgesehen ist, welche die Trägerschicht mit der Membran verbindet, und
- **dass** ein Saum als ein umgebender Rand der Schutzentlüftung vorgesehen ist, welcher zum Umrahmen und/oder Verstärken der Schutzentlüftung ausgebildet ist.

2. Schutzentlüftung nach Anspruch 1,
**dadurch gekennzeichnet,**
**dass** die Membran (10) mit der Plasmabeschichtung (14) nach einem Plasma Enhanced Chemical Vapour Deposition (PECVD) -Verfahren versehen ist.

3. Schutzentlüftung nach Anspruch 1 oder 2,
**dadurch gekennzeichnet,**
**dass** die Plasmabeschichtung (14) aus einem Material mit hydrophoben und/oder oleophoben Eigenschaften gebildet ist.

4. Schutzentlüftung nach Anspruch 3,
**dadurch gekennzeichnet,**
das Material umfasst mindestens gesättigte, ein- und/oder mehrfach ungesättigte Ether, Ketone, Aldehyde, Alkene, Alkine, Amide, Amine, Nitrile, Thioether, Carbonsäureester, Thioesthesen, Sulfone, Thioketone, Thioaldyhyde, Sulfene, Sulfenamide, Fluoracrylate, Siloxane, Epoxide, Urethane, Acrylate, Polyamid 6 (PA6), Polyamid 6,6 (PA66), aliphatisches Polyamid, aromatisches Polyamid Polyurethan (PU), Poly(harnstoffurethan), Polyvinylalkohol (PVA), Polyacrylnitril (PAN), Polylactid (PLA), Polycarbonat (PC), Polybenzimidazol (PBI), Polyethylenoxid (PEO), Polyethylenterephthalat (PET), Poly(butylenterephthalat), Polysulfon (PS), Polyvinylchlorid (PVC), Cellulose, Celluloseacetat (CA), Polyethylen (PE), Polypropylen (PP), PVA/Silica, PAN/TiO₂, PETFE Polyetherimid, Polyanilin, Poly(ethylennaphthalat), Styrol-Butadien-Kautschuk, Polystyrol, Poly(vinylalkohol), Poly(vinylidenfluorid), Poly(vinylbutylen), Polymethylmethacrylat (PMMA), Copolymere, Derivate und Mischungen und/oder Kombinationen davon.

5. Schutzentlüftung nach einem der Ansprüche 1 bis 4,
**dadurch gekennzeichnet,**
**dass** die Trägerschicht (11, 15) fest mit der Membran (12) verbunden ist.

6. Schutzentlüftung nach einem der Ansprüche 1 bis 5,
**dadurch gekennzeichnet,**
**dass** die Membran (12) zwischen zwei Trägerschichten (11, 15) angeordnet ist.

7. Schutzentlüftung nach einem der Ansprüche 1 bis 6,
**dadurch gekennzeichnet,**
**dass** die Membran (12) mit einer maximalen Porengröße von etwa 0,10 µm bis 1,0 µm, gemessen nach ASTM F316-03, gebildet ist.

8. Schutzentlüftung nach einem der Ansprüche 1 bis 7,
**dadurch gekennzeichnet,**
**dass** die Membran (12) als eine Barriere gegen das Eindringen von Mikroorganismen ausgebildet ist.

9. Bettzeug,
**dadurch gekennzeichnet,**
**dass** zumindest eine Schutzentlüftung nach einem der Ansprüche 1 bis 8 vorgesehen ist.

10. Elektronisches oder elektrisches Gerät mit einem Gehäuse,
**dadurch gekennzeichnet,**
**dass** zumindest eine Schutzentlüftung nach einem der Ansprüche 1 bis 8 vorgesehen ist.

11. Verfahren zum Herstellen einer Schutzentlüftung nach einem der Ansprüche 1 bis 8,
wobei
- eine Trägerschicht (11, 15) vorgesehen wird und
- eine Membran (12) auf der Trägerschicht (11, 15) angeordnet wird, wobei die Membran (12) durch ein Elektrospinnverfahren aus überlagerten Fasern mit einer Porenstruktur hergestellt wird, wobei die Trägerschicht und die Membran eine Schutzentlüftungsmembran bilden,
**dadurch gekennzeichnet,**
- **dass** als Trägerschicht (11, 15) ein Monofilamentgewebe vorgesehen wird,
- **dass** die Schutzentlüftungsmembran (10) mit einem Plasmabeschichtungsverfahren behandelt wird, wobei eine Oberflächenbeschichtung (14) sowohl auf die Trägerschicht (11, 15) mit dem Monofilamentgewebe als auch auf die elektrogesponnene Membran (12) aufgebracht wird, und
- **dass** die Schutzentlüftungsmembran mit einer Verbindung zum Verbinden der Trägerschicht und der Membran versehen wird,
- **dass** ein Saum als ein umgebender Rand der Schutzentlüftung vorgesehen wird, welche die Schutzentlüftung umrahmt und/oder verstärkt.

12. Verfahren nach Anspruch 11,
**dadurch gekennzeichnet,**
**dass** die Membran (12) fest mit der Trägerschicht (11, 15) durch ein Heißschmelzverfahren verbunden wird, insbesondere unter Verwendung eines Lasers, durch Ultraschall, durch Beschichten, durch Verkleben oder durch eine Kombination hiervon.

13. Verfahren nach Anspruch 12,
**dadurch gekennzeichnet,**
**dass** die elektrogesponnene Membran (12) direkt auf der Trägerschicht (11, 15) hergestellt wird, wobei die Membran (12) fest mit der Trägerschicht (11, 15) verbunden wird.

14. Verfahren nach einem der Ansprüche 10 bis 13,
**dadurch gekennzeichnet,**
**dass** zumindest eine zusätzliche Trägerschicht vorgesehen wird, welche auch mit der Membran verbunden wird, wobei die Membran zwischen den Trägerschichten angeordnet wird.

## Revendications

1. Évent de protection comprenant
- au moins une couche de support (11, 15) et
- une membrane d'électrofilage (12) qui est agencée sur l'au moins une couche de support (11, 15), dans lequel la membrane d'électrofilage (12) est formée à partir de fibres se trouvant les unes au-dessus des autres, formant une structure de pore, moyennant quoi la structure de pore est conçue,
**caractérisé en ce que**
- la couche de support (11, 15) comprend un tissu à monofilaments,
- un revêtement plasma (14) est appliqué à la fois sur la membrane d'électrofilage (12) et sur le tissu à monofilaments de l'au moins une couche de support (11, 15), et
- une liaison est fournie qui relie la couche de support et la membrane, et
- une couture est fournie en tant que bord périphérique de l'évent de protection qui est conçue pour encadrer et/ou renforcer l'évent de protection.

2. Évent de protection selon la revendication 1,
**caractérisé en ce que**
la membrane (10) est pourvue du revêtement plasma (14) selon le procédé de dépôt chimique en phase vapeur assisté par plasma (PECVD).

3. Évent de protection selon la revendication 1 ou 2,
**caractérisé en ce que**
le revêtement plasma (14) est formé à partir d'un matériau ayant des propriétés hydrophobes et/ou oléophobes.

4. Évent de protection selon la revendication 3,
**caractérisé en ce que**
le matériau comprend au moins des éthers saturés, mono- et/ou polyinsaturés, des cétones, des aldéhydes, des alcènes, des alcynes, des amides, des amines, des nitriles, des thioéthers, des esters carboxyliques, des thioesters, des sulfones, des thiocétones, des thioaldyhydes, des sulfènes, des sulfénamides, des fluoroacrylates, des siloxanes, des époxydes, des uréthanes, des acrylates, un polyamide 6 (PA6), un polyamide 6,6 (PA66), un polyamide aliphatique, un polyamide polyuréthane aromatique (PU), un poly (urée uréthane), un polyalcool vinylique (PVA), un polyacrylonitrile (PAN), un polylactide (PLA), un polycarbonate (PC), un polybenzimidazole (PBI), un polyoxyde d'éthylène (PEO), un polytéréphtalate d'éthylène (PET), un poly(téréphtalate de butylène), un polysulfone (PS), un polychlorure de vinyle (PVC), une cellulose, un acétate de cellulose (CA), un polyéthylène (PE), un polypropylène (PP), un PVA/silice, un PAN/TiO₂, un PETFE polyétherimide, une polyaniline, un poly(naphtalate d'éthylène), un caoutchouc styrènebutadiène, un polystyrène, un poly(alcool vinylique), un poly(fluorure de vinylidène), un poly(vinyl butylène), un polyméthacrylate de méthyle (PMMA), des copolymères, des composés dérivés et des mélanges et/ou des combinaisons de ceux-ci.

5. Évent de protection selon l'une des revendications 1 à 4,
**caractérisé en ce que**
la couche de support (11, 15) est reliée de manière fixe à la membrane (12).

6. Évent de protection selon l'une des revendications 1 à 5,
**caractérisé en ce que**
la membrane (12) est agencée entre deux couches de support (11, 15).

7. Évent de protection selon l'une des revendications 1 à 6,
**caractérisé en ce que**
la membrane (12) est formée avec une taille maximale de pore d'environ 0,10 µm à 1,0 µm mesurée conformément à l'ASTM F316-03.

8. Évent de protection selon l'une des revendications 1 à 7,
**caractérisé en ce que**
la membrane (12) est formée en tant que barrière contre la pénétration de microorganismes.

9. Produit de literie,
**caractérisé en ce que**
au moins un évent de protection selon l'une des revendications 1 à 8 est fourni.

10. Appareil électronique ou électrique avec un boîtier,
**caractérisé en ce que**
au moins un évent de protection selon l'une des revendications 1 à 8 est fourni.

11. Procédé de production d'un évent de protection selon l'une des revendications 1 à 8, dans lequel
- une couche de support (11, 15) est fournie, et
- une membrane (12) est agencée sur la couche de support (11, 15), la membrane (12) étant produite par le procédé d'électrofilage à partir de fibres superposées ayant une structure poreuse, dans lequel la couche de support et la membrane forment une membrane d'évent de protection
**caractérisé en ce que**
- un tissu à monofilaments est fourni en tant que couche de support (11, 15),
- la membrane (10) d'évent de protection est traitée par un procédé de revêtement par plasma, dans lequel un revêtement de surface (14) est appliqué à la fois sur la couche de support (11, 15) ayant le tissu à monofilaments et sur la membrane d'électrofilage (12), et
- la membrane d'évent de protection est fournie avec une liaison reliant la couche de support et la membrane
- une couture est fournie en tant que bord périphérique de l'évent de protection qui est conçue pour encadrer et/ou renforcer l'évent de protection.

12. Procédé selon la revendication 11,
**caractérisé en ce que**
la membrane (12) est fermement liée à la couche de support (11, 15) au moyen d'un procédé de fusion à chaud, en particulier au moyen d'un laser, par ultrasons, par laminage, par collage ou par une combinaison de ceux-ci.

13. Procédé selon la revendication 12,
**caractérisé en ce que**
la membrane d'électrofilage (12) est produite directement sur la couche de support (11, 15), la membrane (12) étant reliée de manière fixe à la couche de support (11, 15).

14. Procédé selon l'une des revendications 10 à 13,
**caractérisé en ce que**
au moins une couche de support supplémentaire est fournie, qui est également reliée à la membrane, dans lequel la membrane est agencée entre les couches de support.
